# EUROPEAN PATENT SPECIFICATION

(11) **EP 2 456 900 B1**
(45) Date of publication and mention of the grant of the patent: **08.05.2013**
(21) Application number: 10735308.8
(22) Date of filing: 20.07.2010
(51) Int. Cl.: C22C 38/22, F16C 33/62

(54) **BEARING STEELS**
STAHL FÜR LAGER
ACIER POUR PALIERS

(30) Priority: 21.07.2009 GB 0912669
(43) Date of publication of application: 30.05.2012
(73) Proprietor: Aktiebolaget SKF, 415 50 Göteborg (SE)
(72) Inventor: KERRIGAN, Aidan Michael, NL- 3583 AG Utrecht (NL); SHERIF, Mohamed, NL- 3511 AS Utrecht (NL); KARLSSON, Henrik, S- 41672 Göteborg (SE)
(74) Representative: Setna, Rohan P.
(86) International application number: PCT/GB2010/001373
(87) International publication number: WO 2011/010088

(56) References cited:
- EP-A1- 0 626 468
- JP-A- 2000 226 641
- US-A- 6 143 425
- US-B1- 6 409 846

## Description

### Technical field

The present invention relates to the field of steels and bearings. More specifically, the present invention relates to a novel bearing steel composition and a method of forming a bearing.

### Background

Bearings are devices that permit constrained relative motion between two parts. Rolling element bearings comprise inner and outer raceways and a plurality of rolling elements (balls or rollers) disposed therebetween. For long-term reliability and performance it is important that the various elements have a high resistance to rolling contact fatigue, wear and creep.

Modern steels are made with varying combinations of iron and alloying elements depending on the desired application of the steel product. Chromium is a common alloying element and is used to resist corrosion and rusting. Stainless steels and surgical stainless steels contain a minimum of 10% chromium.

An example of a stainless steel composition is Böhler N360 Isoextra®. This steel comprises 0.30 wt% carbon (C), 0.60 wt% silicon (Si), 0.40 wt% manganese (Mn), 15.00 wt% chromium (Cr), 1.00 wt% molybdenum (Mo) and 0.40 wt% nitrogen (N). The steel is a corrosion resistant, martensitically hardened stainless steel which exhibits high hardness and compressive strength.

The Böhler N360 Isoextra® steel is produced using a pressurised electroslag remelting (P-ESR) process. In the P-ESR process a consumable electrode is dipped into a pool of slag in a water-cooled mould under a protective atmosphere. An electric current (usually AC) passes through the slag, between the electrode and the ingot being formed and superheats the slag so that drops of metal are melted from the electrode. The drops travel through the slag to the bottom of the water-cooled mould where they solidify. The slag pool is carried upwards as the ingot forms. The new ingot of refined material builds up slowly from the bottom of the mould. The ingot formed is homogeneous and overcomes problems associated with core weakness in conventionally cast ingots as they solidify from the outside inwards.

The protective atmosphere used to produce Böhler N360 Isoextra® comprises nitrogen to increase the nitrogen content of the steel produced. Solid nitrogen-bearing additives are also added to the melt. Nitrogen is attractive as an inexpensive alloying element for enhancing the properties of steel. Due to the extremely short dwell time of the metal droplets in the liquid phase during remelting, the nitrogen pick-up via the gas phase is minimal but the high pressure in the system prevents the escape of nitrogen from additives introduced into the molten steel.

US 614 3425 also discloses a bearing steel comprising carbon, nitrogen, chromium, molybdenum, silicon, manganese and a balance of iron.

Various defects, such as the formation of tree ring patterns and freckles, can occur in the remelted ingots. Furthermore, dendrite skeletons or small broken pieces from the electrode may produce structural defects in the ingot. The process cannot be used on segregation-sensitive alloys which can be undesirably stirred whilst molten by stray magnetic fields. In order to avoid the effects of stray magnetic fields the furnaces are commonly designed to be coaxial and this limits the size and shape of the steel that can be produced.

It is an objective of the present invention to provide an alternative steel composition, to provide an alternative method of producing the composition, and to overcome or at least mitigate some of the problems associated with prior art.

### Summary

According to the invention given by the claims, the present invention provides a bearing steel composition comprising:

| | |
|---|---|
| Carbon | about 0.4 to about 0.8 wt%; |
| Nitrogen | about 0.1 to about 0.2 wt%; |
| Chromium | about 12 to about 18 wt%; |
| Molybdenum | about 0.7 to about 1.3 wt%; |
| Silicon | about 0.3 to about 1 wt%; |
| Manganese | about 0.2 to about 0.8 wt%; and |
| Iron | about 78 to about 86.3 wt%. |

The iron forms the balance of the composition, together with unavoidable impurities.

According to a second aspect, the present invention provides a bearing component formed from a composition as herein described.

According to a third aspect, the present invention provides a bearing comprising a bearing component according to the present invention.

According to a fourth aspect, the present invention provides a method of forming a steel bearing component. The method comprises the steps of providing a powdered steel composition according to the present invention and subjecting it to hot isostatic pressing to form the component.

The present invention will now be described further with reference to the accompanying drawings, provided by way of example, in which:
Figure 1 shows a schematic diagram of an embodiment of the method of the present invention.
Figure 2 shows a flowchart of the steps taken in an embodiment of the method of the present invention.
Figure 3 shows a phase diagram of the composition of the present invention with changing carbon content and with a constant 0.15 wt% nitrogen content.

The present invention will now be described further. In the following passages different aspects/embodiments of the invention are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The bearing steel composition includes nitrogen in an amount of from 0.1 to 0.2 wt%, preferably from 0.11 to 0.18 wt% and more preferably from 0.13 to 0.17 wt%. The nitrogen content serves to increase the hardness of the steel article. However, the nitrogen concentration in austenite during steel processing at high temperature is dependent on the chromium, manganese and molybdenum concentrations and, accordingly, it is difficult to introduce more nitrogen into the composition unless the content of these alloying elements is increased. Additionally, resorting to pressure metallurgy can increase nitrogen solubility.

Carbon is included in an amount of from 0.45 to 0.8 wt%, preferably from 0.45 to 0.7 wt% and more preferably from 0.45 to 0.6 wt%. The carbon serves to increase the hardness of the steel article formed. If there is less than 0.4% carbon then the steel will be insufficiently hard. The carbon solubility is inversely related to the chromium concentration; if the chromium weight percent is increased then the carbon content in the final composition is likely to decrease.

Preferably the combined percentage of carbon and nitrogen present is from 0.5 to 1 wt%, more preferably from 0.5 to 0.88 wt%, more preferably from 0.5 to 0.77 wt% and most preferably from 0.5 to 0.7 wt%. These ranges have been found to provide the greatest hardness of the final steel composition.

In order to compensate for the difficulties in introducing more nitrogen into the composition, without resorting to the complex further steps of pressure metallurgy, the amount of carbon is preferably from 0.45 to 0.6 wt%. This helps provide the preferable total amount of carbon and nitrogen as noted above. This amount of carbon content with a nitrogen content of approximately 0.15 wt% allows a maximum amount of soluble interstitial atoms to be retained in the austenite, or martensite after hardening, to provide acceptable hardness/load carrying properties.

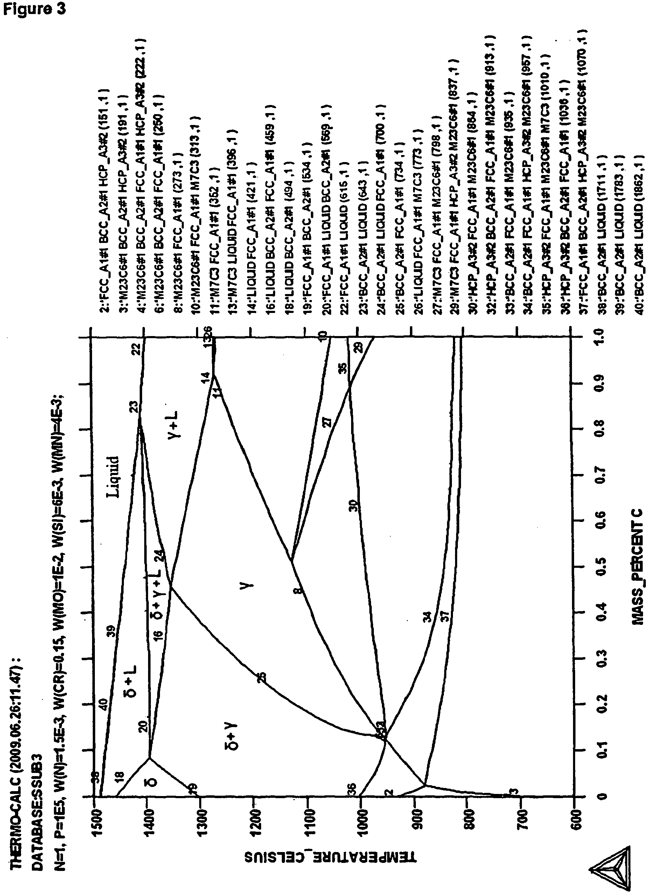

Figure 3 shows a calculated pseudo-binary (isopleth) diagram for the composition of the present invention having a nitrogen content of 0.15 wt% and a variable carbon content. At a carbon content of 0.3 wt% the δ-ferrite phase forms at about 1227°C. The austenite region appears to be at its wildest (in terms of temperature) with a carbon content of about 0.45 wt%, which allows for best workability.

Assuming full carbon solubility, for a 0.45 wt% carbon and 0.15 wt% or greater nitrogen austenite composition, the total C+N content would amount to about 0.6 wt%. This value would provide a hardness values of greater than 58 HRC. Figure 3 shows that the carbon content may be increased further as the γlγ+L (liquid) phase line is not steeply decreasing.

Chromium is included in an amount of from 14 to 18 wt%, preferably from 15 to 17 wt% and more preferably from 15.5 to 16.5 wt%. The chromium provides an improved corrosion resistance property to the steel. The chromium leads to a hard oxide on the metal surface to inhibit corrosion.

Molybdenum is included in an amount of from 0.7 to 1.3 wt%, preferably from 0.9 to 1.1 wt%. Adding molybdenum to the steel imparts toughness for heavy service, and provides especially heat-resistant alloys. Conventional carbon steels have less than 0.5 wt% Mo, but having a greater amount of molybdenum in the present composition, in conjunction with the other alloying elements, improves mechanical properties such as hardness.

Silicon is included in an amount of from 0.3 to 1 wt%, preferably from 0.5 to 0.9 wt%.

Manganese is included in an amount of from 0.2 to 0.8 wt%, preferably from 0.3 to 0.6 wt%. The manganese increase hardenability and contributes to the steel's strength.

Iron is included in an amount of from 78 to 86.3 wt% and as the balance of the composition, together with unavoidable impurities.

Other elements which are present include oxygen, phosphorus and sulphur, present in an amount of 0.02 wt% or less. The phosphorous content preferably does not exceed 0.01 wt%. The sulphur content preferably does not exceed 0.002 wt%. The oxygen content preferably does not exceed 0.0001wt%.

It will be appreciated that the steel for use in the bearing component according to the present invention contains unavoidable impurities, although, in total, these are unlikely to exceed 0.5 wt.% of the composition. Preferably, the alloys contain unavoidable impurities in an amount of not more than 0.3 wt.% of the composition, more preferably not more than 0.1 wt.% of the composition. The phosphorous and sulphur contents are preferably kept to a minimum.

Prior to hardening, the steel according to the present invention will typically comprise austenite as the predominant phase. That is, at least 50 wt%, preferably at least 70 wt% and more preferably at least 90 wt% austenite. In a preferred embodiment, the composition is substantially all austenite. That is, at least 95 wt%, more preferably 98 wt% and most preferably at least 99 wt% austenite. Austenite is a metallic, nonmagnetic solid solution of carbon and iron that forms in conventional steels above a critical temperature of 723°C. It has a face-centred cubic (FCC) structure that allows it to hold a high proportion of carbon in solution. When the steel composition is subjected to hardening and tempering it will exhibit a tempered martensite, structure with some retained austenite as well as carbides/carbonitrides. The phases and structures of steel are well known in the art.

If austenite is cooled slowly, then the structure can break down into a mixture of ferrite and cementite (usually in the structural forms pearlite or bainite). Rapid cooling can result in martensite being formed. The rate of cooling determines the relative proportions of these phases and therefore the mechanical properties (e.g. hardness, tensile strength) of the steel. Quenching (to induce martensitic transformation), followed by tempering (to break down some martensite and retained austenite, as well as to precipitate some carbides/carbonitrides), is the most common heat treatment for high-performance steels. Deep cooling treatments after hardening and/or tempering stage(s) may also be applied.

For bearing applications the steel composition of the present invention preferably has a microstructure comprising martensite, any retained austenite and precipitated carbides and/or carbonitrides.

The method employed in the present invention is a form of powder metallurgy. Powder metallurgy typically relies on a forming and fabrication technique comprising three major processing stages:
• Powdering: the material to be handled is physically powdered and divided into many small individual particles.
• Moulding: the powder is injected into a mould or passed through a die to produce a weakly cohesive structure close in dimension to the desired product.
• Compression: the moulded article is subjected to compression and optionally high temperature to form the final article.

The method of the present invention forms at least a wear portion of a bearing component from a bearing steel composition as set out above. The steel comprises a number of elements in specified amounts.

The composition used in the method preferably corresponds to the composition of the final article produced. However, while the weight percentage of most of the elements will remain essentially constant, the nitrogen content may decrease slightly, perhaps due to degassing. While the composition initially produced by the hot isostatic pressing step of the present invention is predominantly austenitic, the composition is preferably subjected to further processing steps to introduce a martensite phase. Accordingly, a bearing component made according to the present invention will generally comprise a martensitic microstructure having some retained austenite (1-30 wt%) and some carbides/carbonitrides (<5 wt%).

It is preferred that the powdered steel composition is first formed by conventional techniques, for example, by melting suitable ingredients in a melting crucible. The melted components can then be powdered for use in the method of the present invention.

Suitable ingredients include the raw elements or oxides or salts of the ingredients which can be decomposed on heating. The ingredients are preferably melted at a temperature in excess of 1500°C to ensure that the composition is fully molten. If the temperature is lower then precipitation of a solid fraction such as δ-ferrite or the like may occur.

The melt can be produced in an induction furnace and/or tapped into an induction heated ladle where further alloying elements can be added in a protective atmosphere. The melt can be stirred and temperature controlled throughout the process. Prior to the atomisation the melt can be tapped into a tundish where the melt is protected by, for example, a protective slag cover or an inert atmosphere.

Each of the powder metallurgical steps will now be discussed in further detail in relation to the method of the present invention.

A first step is to provide a powder of the steel composition. A powder is a dry, bulk solid composed of a large number of very fine particles that may flow freely when shaken or tilted. Powders are a special sub-class of granular materials. In particular, powders refer to those granular materials that have the finer grain sizes, and that therefore have a greater tendency to form clumps when flowing. According to the present invention, the powder of the steel composition preferably has a particle size of from 1 µm to 1000 µm, preferably 10 µm to 250 µm and most preferably 50 µm to 125 µm.

One technique for producing the powder is atomisation. This technique is especially preferred as it allows the trapping of a particularly preferred phase from a molten steel composition. Other techniques are known, such as comminution, grinding, chemical reactions, centrifugal disintegration, or electrolytic deposition.

Atomization may be accomplished by, for example, forcing a molten metal stream through an orifice at moderate pressures or by disintegration of a molten metal stream by a high pressure gas stream in an atomisation chamber. As it contacts the gas or a nozzle or an orifice the composition may drop in temperature; this can favour austenite formation. Preferably the chamber is filled with gas to promote further turbulence of the molten metal jet. Preferably the atomisation is caused by contacting the molten steel composition with one or more jets of gas, preferably air, nitrogen or an inert gas, for example.

Alternatively, simple atomization may be used by forcing a liquid metal through an orifice at a sufficiently high velocity to provide the necessary turbulent flow to produce powder. Nozzle vibration, nozzle asymmetry, multiple impinging streams, or molten-metal injection into ambient gas can all be used to increase the extent of the atomization.

Once the steel composition has been provided as a powder it can optionally be stored under inert gas hermetically-sealed vessels. Alternatively, it can be used with minimal delay.

In a second step the powder is placed in a mould. In one embodiment this comprises canning the powder in capsules of mild steel, which are produced by sheet metal forming and welding. Such a mould or capsule would be designed to give the end product the desired shape. Alternatively, the mould may be formed of heat resistant materials that are known in the art. Compound products can be produced by designing capsules or moulds with separate compartments for different powders or enclosing parts of solid material together with the powder.

The mould is preferably subjected to elevated temperature and a very high vacuum to remove air and moisture from the powder. The mould is then preferably sealed before being hot isostatically pressed. The application of high inert gas pressures and elevated temperatures results in the removal of internal voids and creates a strong metallurgical bond throughout the material. The result is a clean homogeneous material with a uniformly fine grain size and a near 100% density.

During hot isostatic pressing (HIP) the filled mould or capsule is placed in a conventional HIP press where it is subjected to high pressure and temperature. The HIP parameters of pressure, temperature and time are predetermined in order to give the material full density and the required properties. Suitable temperatures are those where the composition is in the y phase (e.g. the y region in the phase diagram in figure 3). That is, from about 1350 to 1100°C, more preferably from 1300 to 1200°C. Suitable pressures may be up to 200 MPa but ideally are about 100MPa. The pressure may be in the range of from 10 to 150 MPa and most preferably from 95 to 105 MPa. Treatment times from a cold start (i.e. including the time necessary for the temperature to be ramped up) are preferably from 1 minute to 24 hours, more preferably from 1 hour to 10 hours and most preferably from 2 hours to 8 hours.

Preferably the step of hot isostatic pressing is conducted under an inert atmosphere. Suitable inert atmospheres include noble gases such as argon. In another preferred embodiment the hot isostatic pressing is conducted under air to avoid overly complicating the method and apparatus.

According to one embodiment of the present invention the method can further comprise a step of nitriding (or case hardening) the hot isostatically pressed bearing component (article). Such processing steps are intensive and undesirable since the method of the present invention provides a suitably hard product without requiring such steps. The nitriding may serve to harden at least a surface portion of the article. The finished article or composition can therefore be provided with a higher nitrogen content than could otherwise be achieved.

Suitable nitriding processes are well known in the art and include: gas nitriding; liquid or salt bath nitriding; and ion or plasma nitriding. In gas nitriding the donor is a nitrogen rich gas usually ammonia (NH₃) which is contacted with the pre-heated article. Preferably this is performed at 200 to 800°C and is allowed to dwell for at least 30 minutes. When ammonia comes into contact with the heated work piece it disassociates into nitrogen and hydrogen. The nitrogen then diffuses from the surface into the core of the material.

In liquid or salt bath nitriding the nitrogen donating medium is a nitrogen containing salt such as cyanide salt. The temperature used is typically 550-800°C.

Plasma nitriding relies on a plasma of nitrogen ions and allows for focused and specific nitriding.

The method of the present invention can further comprise finishing steps and/or tempering and/or annealing steps. In addition to the deep cooling treatment mentioned above, another possible step can be stress relief annealing of a hardened article. Such steps are well known in the art. Depending on the type of material and the application, the products may be heat treated, machined and subjected to various types of quality control, such as ultra-sonic inspection, dye penetrant testing, testing of mechanical properties, etc. If a mild steel sheet is used as the mould then it can be removed by machining or by acid pickling.

Examples of finishing steps include grinding and polishing. Examples of tempering steps include tempering at between 100 and 500°C, more preferably 200 to 450°C, for 10 minutes to 24 hours, more preferably 30 minutes to three hours. If a hardening step such as nitriding is used then it may be desirable to cool the article to a sub-zero temperature (preferably -70°C to -80°C) after hardening and before tempering. Preferably the subzero treatment is at -80°C for 2 hours under air. Preferably tempering, which can be conducted without other hardening steps, is performed at 200°C for two hours under air.

Another finishing step is hot working or hot rolling. These techniques are well known in the art. Hot working refers to processes where metals are plastically deformed above their recrystallization temperature. Being above the recrystallization temperature allows the material to recrystallize during deformation. This is important because recrystallization keeps the materials from strain hardening, which ultimately keeps the yield strength and hardness low and ductility high. The processing temperature is commonly 0.6 of the materials melting temperature. Hot rolling is not especially preferred but may be used to arrive at the final desired dimensions.

Hot rolling is a hot working metalworking process where large pieces of metal, such as slabs or billets, are heated above their recrystallization temperature and then deformed between rollers to form thinner cross sections. Hot rolling produces thinner cross sections than cold rolling processes with the same number of stages. Hot rolling, due to recrystallization, will reduce the average grain size of a metal while maintaining an equiaxed microstructure.

Using the method of the present invention rather than, for example, P-ESR, the inventors have discovered that it is possible to produce a bearing component that exhibits high corrosion resistance. Furthermore, the method of the present invention provides a number of advantages over conventional methods.

The reduced porosity of hot isostatically pressed materials enables improved mechanical properties and increased workability. The HIP process eliminates internal voids and creates clean, firm bonds and fine, uniform microstructures. These characteristics are not possible with welding, casting or P-ESR. The virtual elimination of internal voids enhances part performance and improves fatigue strength. A further advantage of the HIP process is its ability to create near-net shapes that require little machining.

In melting operations the "phase rule" applies to all pure and combined elements and strictly dictates the distribution of liquid and solid phases which can exist for specific compositions. However, by using powder metallurgy considerations of solid-liquid phase changes can be ignored, so the process is more flexible than casting, extrusion, or forging techniques. It is therefore possible to fabricate components which otherwise would decompose or disintegrate. In the present case, the stable austenitic phase of the desired composition is narrow (in terms of temperature) under conventional processes (welding, casting or P-ESR) and the presently claimed powder metallurgical process allows for the production of a stable phase without the likely impurities that would otherwise arise.

The claimed manufacturing process produces very little scrap metal and allows for the production of different product shapes. The tolerances that this process can do are very precise, ranging from +/- 0.02cm for axial dimensions and +/- 0.05cm for radial dimensions.

The method and composition of the present invention can be used to produce steel products such as bearing components. The bearing component will typically have been formed by a process involving hardening and tempering. As a consequence, the microstructure will generally comprise martensite, together with any retained austenite and also carbides and/or carbonitrides. In one embodiment, the bearing component may be substantially austenitic with just the surface wear portion subjected to martensitic through-hardening. Alternatively, the whole product may be tempered and hardened by conventional methods to produce a martensitically hardened product.

The present invention also provides for a bearing component formed by the method or made of the steel composition as herein described. The bearing component may be at least one of a rolling element, an inner ring, and an outer ring.

At least a wear portion of the bearing component is formed by the method or made of the steel composition as herein described. The wear portion, for example, the raceway of a bearing ring, may be formed separately from the body of the bearing ring and then joined by conventional joining techniques such as diffusion joining or welding.

The present invention also provides for a bearing comprising a bearing component as herein described.

Bearings may be used in many different types of machinery to retain and support rotating components such as, for example, a wheel on a vehicle, a vane on a windmill or a drum in a washing machine. The present invention is particularly suited for the manufacture of bearing rings for large-size bearings (LSB). LSBs have an outside diameter of 450 cm or greater.

The bearing of the present invention is particularly suitable for use as a turbine bearing, in particular a wind turbine or wind mill bearing. Under such applications the high corrosion resistance and strength characteristics are key.

In a preferred embodiment, the method of the present invention can be used to adhere a wear portion of a bearing to the body of a bearing component. That is, the body of the bearing component forms a part of the mould and the wear portion is clad onto the surface using hot isostatic pressing. Thus, for example, a less expensive material can be coated with a thin layer of powdered steel composition to create a suitable surface for withstanding rolling contact fatigure. This reduces costs by placing expensive, wear resistant materials only where they are needed. As a result, wear resistant properties are improved without incurring unnecessary cost penalties. An additional benefit of cladding is that it can create bonds between otherwise incompatible materials such as metal, intermetallic, and ceramic powders.

The hardness of the steel composition as an article is preferably 50 HRC or more, and most preferably 55 HRC or 58HRC or more. The hardness is measured according to the Rockwell hardness test which is well known in the art. HRC is measured with a minor load of 98N and a diamond cone major load of 1372N.

### Example

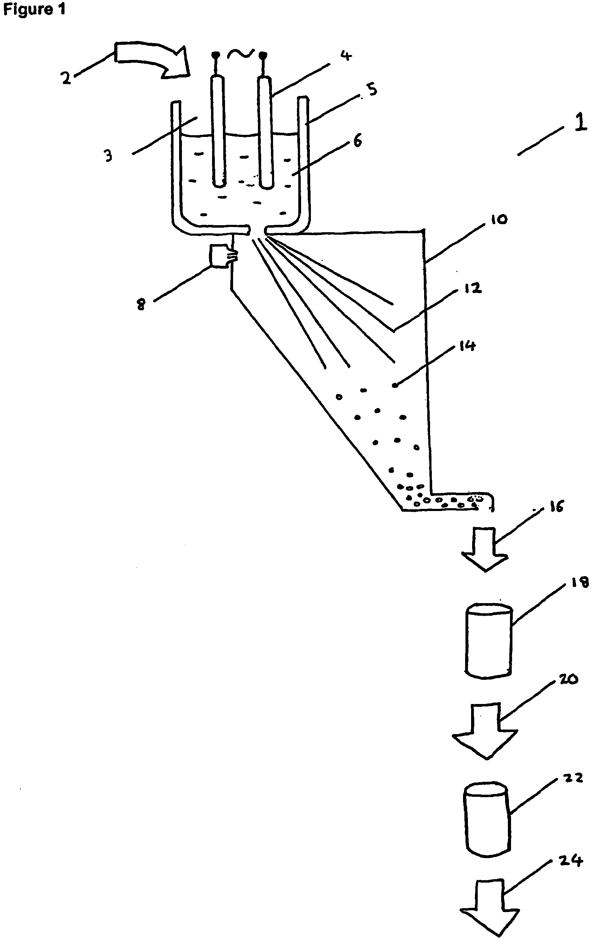

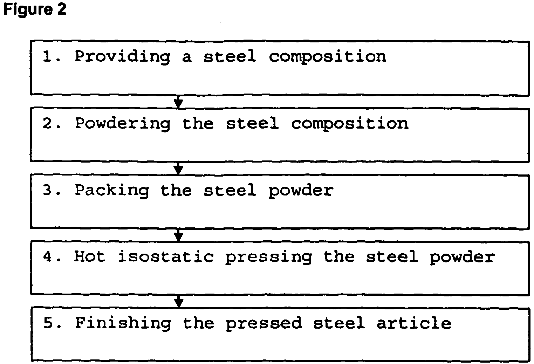

With reference to Figures 1 and 2 the production of a stainless steel bearing will now be described by way of a non-limiting example.

As is shown in Figure 1, a steel composition 6 was prepared in an induction furnace 5. Ingredients 2 necessary for providing the desired composition were fed into the induction furnace 5. Two electrodes 4 connected to an alternating power supply, and placed within the induction furnace 5 were used to heat the ingredients 2 to provide a molten steel composition 6. Optionally, the molten composition 6 could have been held in a tundish (not shown) under a protective atmosphere prior to atomisation.

The ingredients 2 were selected to provide the following steel composition 6.

**Table 1: All in wt%.**

| Material | Balance | C | N | Cr | Mo | Si | Mn | Fe |
|---|---|---|---|---|---|---|---|---|
| Target | Fe | 0.46 | 0.20 | 15 | 1 | 0.5 | 0.5 | 82.34 |

Once the steel composition 6 was fully molten it was slowly discharged from the induction furnace 5 into an expansion chamber 10. The molten steel composition 6 was contacted with nitrogen air jets provided from a blower 8. The blown steel composition 6 became a number of finely dispersed lines of steel 12, which became increasingly fragmented within the expansion chamber 10 due to turbulence and formed a powder 14. The powder 14 was collected in the base of the expansion chamber 10.

In a packing step 16 the powder 14 was loaded into mild steel moulds 18 shaped to form the body of a bearing component and lightly compressed to form a weak cohesive structure.

In a hot isostatic pressing step 20 the filed moulds were subjected to a temperature of 1200°C and a pressure of 95MPa for 3 hours. Hot isostatic pressing was conducted under an argon atmosphere.

In a finishing treatment step 24 the mild steel moulds 18 were removed by pickling and the bearing component was removed. The bearing was substantially all austenite. The bearing component was then subjected to a step of tempering and hardening to form a martensitically hardened bearing component.

Turning to Figure 2, the foregoing process can be summarised in the steps of:
1. providing the steel composition 6, which was achieved by melting the ingredients 2 together in the induction furnace 5.
2. powdering the steel composition 6, which was achieved by atomisation with air jets in the expansion chamber 10.
3. packing the steel powder 14 into moulds 18.
4. hot isostatically pressing 20 the moulds 18.
5. finishing the pressed steel article by removing the mould 18.

The bearing component was analysed to confirm its final composition and properties. The final composition is shown in table 2.

**Table 2: Chemical composition of the final composition. All in wt%.**

| Material | Balance | C | N | Cr | Mo | Si | Mn | Fe |
|---|---|---|---|---|---|---|---|---|
| Composition | Fe | 0.46 | 0.20 | 15 | 1 | 0.5 | 0.5 | 82.34 |

The bearing component was found to exhibit excellent corrosion resistance, strength (tensile strength) and hardness.

Having sufficient interstitial species soluble in austenite during hardening is clearly important to achieve the hardness level which is required in the bearing material. The carbon and nitrogen concentrations would amount, in the current case, to 0.6 wt%.

In view of the foregoing the present invention enables the production of bearing components having particularly high corrosion resistance, strength and hardness.

Furthermore, by using a powder metallurgical synthesis route the composition avoids defects and unwanted impurity phases, has a finer grain size and exhibits even greater corrosion resistance, strength and hardness.

## Claims

1. A bearing steel composition comprising:
| | |
|---|---|
| Carbon | 0.45 to 0.8 wt%; |
| Nitrogen | 0.1 to 0.2 wt%; |
| Chromium | 14 to 18 wt%; |
| Molybdenum | 0.7 to 1.3 wt%; |
| Silicon | 0.3 to 1 wt%; |
| Manganese | 0.2 to 0.8 wt%; |
| Iron | 78 to 86.3 wt%; and |
optionally oxygen, phosphorus and sulphur in an amount of 0.02 wt% or less;
wherein the iron forms the balance of the composition, together with unavoidable impurities.

2. A bearing steel composition according to claim 1, wherein the combined carbon and nitrogen content is from 0.5 to 0.7 wt% of the total composition.

3. A bearing steel composition according to claim 1 or claim 2, wherein the steel composition comprises at least one of the elements in an amount of:
| | |
|---|---|
| Carbon | 0.45 to 0.7 wt%; |
| Nitrogen | 0.11 to 0.18 wt%; |
| Chromium | 14 to 17 wt%; |
| Molybdenum | 0.9 to 1.1 wt%; |
| Silicon | 0.5 to 0.9 wt%; and |
| Manganese | 0.3 to 0.6 wt%. |

4. A bearing steel composition according to any one of the preceding claims, wherein the steel composition comprises:
| | |
|---|---|
| Carbon | 0.45 to 0.6 wt%; |
| Nitrogen | 0.13 to 0.17 wt%; |
| Chromium | 15 to 16.5 wt%; |
| Molybdenum | 0.9 to 1.1 wt%; |
| Silicon | 0.5 to 0.9 wt%; and |
| Manganese | 0.3 to 0.6 wt% and |
| the balance iron and unavoidable impurities. | |

5. A bearing steel composition according to any one of the preceding claims and having a microstructure comprising martensite, retained austenite and precipitated carbides and/or carbonitrides.

6. A bearing component formed from a composition according to any one of claims 1 to 4.

7. A bearing component according to claim 6 which is at least one of a rolling element, an inner ring, and an outer ring.

8. A bearing comprising a bearing component as claimed in claim 6 or claim 7.

9. A method of forming a bearing component comprising the steps of:
a) providing a powdered steel composition according to any one of claims 1 to 4;
b) subjecting the powdered steel composition to hot isostatic pressing to form said component.

10. A method according to claim 9, wherein the powdered steel composition is provided by atomising a molten steel composition by contacting it with at least one jet of gas.

11. A method according to claim 9 or claim 10, wherein the step of hot isostatic pressing is conducted at a temperature of from 1000°C to 1400°C and a pressure of up to 200MPa.

12. A method according to any one of claims 9 to 11, wherein the step of hot isostatic pressing is conducted under an inert atmosphere.

13. A method according to any one of claims 9 to 12, further comprising a step of:
a) case hardening;
b) tempering; and/or
c) finishing.

## Patentansprüche

1. Lagerstahlzusammensetzung, die aufweist:
| | |
|---|---|
| Kohlenstoff | 0,45 bis 0,8 Gew.-%; |
| Stickstoff | 0,1 bis 0,2 Gew.-%; |
| Chrom | 14 bis 18 Gew.-%; |
| Molybdän | 0,7 bis 1,3 Gew.-%; |
| Silicium | 0,3 bis 1 Gew.-%; |
| Mangan | 0,2 bis 0,8 Gew.-%; |
| Eisen | 78 bis 86,3 Gew.-%; |
optional Sauerstoff, Phosphor und Schwefel in einer Menge von 0,02 Gew.-% oder darunter;
wobei Eisen zusammen mit unvermeidlichen Verunreinigungen den Rest der Zusammensetzung bildet.

2. Lagerstahlzusammensetzung nach Anspruch 1, worin der Kohlenstoff und Stickstoffgehalt insgesamt 0,5 bis 0,7 Gew.-% der gesamten Zusammensetzung beträgt.

3. Lagerstahlzusammensetzung nach Anspruch 1 oder Anspruch 2, worin die Stahlzusammensetzung zumindest eines der Elemente in der folgenden Menge enthält:
| | |
|---|---|
| Kohlenstoff | 0,45 bis 0,7 Gew.-%; |
| Stickstoff | 0,11 bis 0,18 Gew.-%; |
| Chrom | 14 bis 17 Gew.-%; |
| Molybdän | 0,9 bis 1,1 Gew.-%; |
| Silicium | 0,5 bis 0,9 Gew.-%; |
| Mangan | 0,3 bis 0,6 Gew.-%. |

4. Lagerstahlzusammensetzung nach einem der vorhergehenden Ansprüche, worin die Stahlzusammensetzung aufweist:
| | |
|---|---|
| Kohlenstoff | 0,45 bis 0,6 Gew.-%; |
| Stickstoff | 0,13 bis 0,17 Gew.-%; |
| Chrom | 15 bis 16,5 Gew.-%; |
| Molybdän | 0,9 bis 1,1 Gew.-%; |
| Silicium | 0,5 bis 0,9 Gew.-%; |
| Mangan | 0,3 bis 0,6 Gew.-%; und |
Rest Eisen und unvermeidliche Verunreinigungen.

5. Lagerstahlzusammensetzung nach einem der vorhergehenden Ansprüche, die eine Mikrostruktur aufweist, die Martensit, Restaustenit und ausgeschiedene Carbide und/oder Carbonitride umfasst.

6. Lagerkomponente, die aus einer Zusammensetzung nach einem der Ansprüche 1 bis 4 gebildet ist.

7. Lagerkomponente nach Anspruch 6, bei der es sich um ein Wälzelement und/oder einen Innenring und/oder einen Außenring handelt.

8. Lager, das eine Lagerkomponente nach Anspruch 6 oder Anspruch 7 umfasst.

9. Verfahren zur Formung einer Lagerkomponente, das Schritte aufweist zum:
Bereitstellen einer pulverförmigen Stahlzusammensetzung nach einem der Ansprüche 1 bis 4;
Heißisostatisches Pressen der pulverförmigen Stahlzusammensetzung zum Formen der Komponente.

10. Verfahren nach Anspruch 9, worin die pulverförmige Stahlzusammensetzung durch Zerstäuben einer geschmolzenen Stahlzusammensetzung bereitgestellt wird, indem sie mit zumindest einem Gasstrahl in Kontakt gebracht wird.

11. Verfahren nach Anspruch 9 oder Anspruch 10, worin der Schritt des heißisostatischen Pressens bei einer Temperatur von 1000 bis 1400 °C und unter einem Druck von bis zu 200 MPa durchgeführt wird.

12. Verfahren nach einem der Ansprüche 9 bis 11, worin der Schritt des heißisostatischen Pressens unter einer inerten Atmosphäre durchgeführt wird.

13. Verfahren nach einem der Ansprüche 9 bis 12, das ferner einen Schritt aufweist zum:
a) Einsatzhärten;
b) Anlassen; und/oder
c) Endbearbeiten.

## Revendications

1. Composition d'acier pour paliers comprenant :
| | |
|---|---|
| carbone | 0,45 à 0,8 % en poids ; |
| azote | 0,1 à 0,2 % en poids ; |
| chrome | 14 à 18 % en poids ; |
| molybdène | 0,7 à 1,3 % en poids ; |
| silicium | 0,3 à 1 % en poids ; |
| manganèse | 0,2 à 0,8 % en poids |
| fer | 78 à 86,3 % en poids ; et |
facultativement, de l'oxygène, du phosphore et du soufre en une quantité égale ou inférieure à 0,02 % en poids ;
dans laquelle le fer représente le reste de la composition, conjointement avec les impuretés inévitables.

2. Composition d'acier pour paliers suivant la revendication 1, dans laquelle la somme des quantités de carbone et d'azote va de 0,5 à 0,7 % en poids de la composition totale.

3. Composition d'acier pour paliers suivant la revendication 1 ou la revendication 2, ladite composition d'acier comprenant au moins un des éléments en une quantité de :
| | |
|---|---|
| carbone | 0,45 à 0,7 % en poids ; |
| azote | 0,11 à 0,18 % en poids ; |
| chrome | 14 à 17 % en poids ; |
| molybdène | 0,9 à 1,1 % en poids ; |
| silicium | 0,5 à 0,9 % en poids ; et |
| manganèse | 0,3 à 0,6 % en poids. |

4. Composition d'acier pour paliers suivant l'une quelconque des revendications précédentes, ladite composition d'acier comprenant :
| | |
|---|---|
| carbone | 0,45 à 0,6 % en poids ; |
| azote | 0,13 à 0,17 % en poids ; |
| chrome | 15 à 16,5 % en poids ; |
| molybdène | 0,9 à 1,1 % en poids ; |
| silicium | 0,5 à 0,9 % en poids ; et |
| manganèse | 0,3 à 0,6 % en poids, |
le reste consistant en fer et impuretés inévitables.

5. Composition d'acier pour paliers suivant l'une quelconque des revendications précédentes et ayant une microstructure comprenant de la martensite, de l'austénite de trempe et des carbures et/ou carbonitrures précipités.

6. Composant de palier formé d'une composition suivant l'une quelconque des revendications 1 à 4.

7. Composant de palier suivant la revendication 6, qui est au moins l'un d'un élément de roulement, d'une bague intérieure et d'une bague extérieure.

8. Palier comprenant un composant de palier suivant la revendication 6 ou la revendication 7.

9. Procédé pour former un composant de palier, comprenant les étapes suivantes :
a) fournir une composition d'acier réduite en poudre suivant l'une quelconque des revendications 1 à 4 ;
b) soumettre la composition d'acier réduite en poudre à une compression isostatique à chaud pour former ledit composant.

10. Procédé suivant la revendication 9, dans lequel la composition d'acier réduite en poudre est fournie par atomisation d'une composition d'acier fondue en mettant en contact cette composition avec au moins un jet de gaz.

11. Procédé suivant la revendication 9 ou la revendication 10, dans lequel l'étape de compression isostatique à chaud est mise en oeuvre à une température de 1000°C à 1400°C et à une pression allant jusqu'à 200 mPa.

12. Procédé suivant l'une quelconque des revendications 9 à 11, dans lequel l'étape de compression isostatique à chaud est mise en oeuvre sous une atmosphère inerte.

13. Procédé suivant l'une quelconque des revendications 9 à 12, comprenant en outre une étape :
a) de cémentation ;
b) de revenu ; et/ou
c) de finition.
